# FASCICULE DE BREVET EUROPEEN

(11) **EP 1 654 968 B1**
(45) Date de publication et mention de la délivrance du brevet: **16.05.2007**
(21) Numéro de dépôt: 05356197.3
(22) Date de dépôt: 08.11.2005
(51) Int. Cl.: A47J 31/40, A47J 31/36

(54) **Distributeur automatique de boissons infusées**
Brühgetränkemaschine
Automatic infusion dispenser

(30) Priorité: 09.11.2004 FR 0411894
(43) Date de publication de la demande: 10.05.2006
(73) Titulaire: SEB SA, 69130 Ecully (FR)
(72) Inventeur: Morin, Gilles, 14210 Sainte Honoride du Fay (FR); Brodin, Didier, 14790 Verson (FR); Morcel, Luc, 14000 Caen (FR)
(74) Mandataire: Kiehl, Hubert

(56) Documents cités:
- DE-U1- 29 915 025
- US-A- 5 823 096

## Description

La présente invention est relative à un appareil du type distributeur automatique de boissons infusées à partir d'un dispositif distributeur de produit alimentaire pulvérulent d'infusion ou de percolation, tels le café moulu, le thé, le chocolat, etc.

Un appareil de préparation et distribution de boissons chaudes, tel que décrit dans le document DE 29915025 U, comprend généralement un réservoir d'eau froide, une pompe électrique, une chaudière et une tête d'infusion apte à recevoir le produit pulvérulent en vue de lui injecter l'eau chaude en provenance de ladite chaudière, la boisson obtenue étant ensuite orientée vers un récipient collecteur. En fin de cycle d'infusion, la tête d'infusion doit être ouverte afin de pouvoir y introduire à nouveau le produit d'infusion après avoir évacué le reste de produit infusé.

Un tel appareil est décrit dans le document WO99/12457 et concerne un appareil apte à distribuer de manière automatique du café espresso à partir de poudre de café. L'appareil comprend un groupe d'infusion comportant une chambre d'infusion à axe vertical apte à recevoir un piston presseur coulissant selon ledit axe vertical actionné par le piston d'un vérin hydraulique. Le piston du vérin hydraulique est relié au piston presseur et peut passer d'une position de repos à une position de travail dans laquelle le piston presseur est en compression dans la chambre d'infusion sous l'effet du liquide sous pression. Le passage à la position de repos se fait par un ressort de rappel.

Cet appareil comprend par ailleurs un distributeur automatique de mouture comportant un réservoir contenant la mouture, muni d'un orifice de distribution, une goulotte conduisant la mouture vers la chambre d'infusion, ainsi qu'un moyeu relié à un arbre qui met en rotation les palettes du moyeu pour pousser une certaine quantité de mouture dans ladite goulotte via l'orifice de distribution lors de l'entraînement dudit arbre. Un tel distributeur automatique de mouture est décrit dans le document FR 2 713 906.

Fonctionnant à satisfaction, on a quand même constaté que des bourrages de café étaient présents dans le canal conduisant la mouture du distributeur vers la chambre d'infusion. En effet, après la réalisation de quelques cafés successivement, la chambre d'infusion dégage de l'humidité sous forme de vapeur. La goulotte de descente de café étant située dans la proximité de la chambre d'infusion, la vapeur que la chambre dégage vient se condenser sur les parois de la goulotte, favorisant ainsi l'accrochage de la poudre de café. Le café s'accumule ainsi sur les parois de la goulotte du distributeur de mouture ce qui fait que, après quelques cycles de café, un bourrage de café peut se constituer entre celle-ci et la chambre d'infusion, bourrage qui est d'autant plus important que la mouture est fine.

Par ailleurs, le document WO 03/013324 au nom de la demanderesse décrit un autre dispositif doseur de café moulu agencé dans le boîtier d'une machine à café comportant une chambre d'infusion alimentée par la goulotte du dispositif dont l'ouverture d'entrée s'ouvre à l'extérieur du boîtier. Le doseur de café moulu présente une trappe agencée mobile en partie supérieure de la goulotte et déterminant un volume de dosage correspondant au volume de la chambre d'infusion. La trappe est montée pivotante dans la goulotte et est actionnée en mouvement par une tringlerie de commande reliée au pivotement du couvercle. La tringlerie comprend notamment une biellette d'extrémité montée articulée sur le couvercle ayant une forme en épingle bombée et qui, outre sa fonction d'entraînement de la trappe, remplit une fonction supplémentaire de raclage de la surface supérieure de cette dernière. Toutefois, un tel dispositif actionné par l'ouverture manuelle du couvercle, n'est pas adapté au fonctionnement d'un distributeur automatique de boissons où la plupart des fonctions sont automatisées.

Le but de la présente invention est de remédier aux inconvénients précités et de proposer un distributeur automatique de boissons infusées comportant un distributeur de produit pulvérulent apte à éviter le bourrage de produit dans la canalisation le conduisant à la chambre d'infusion.

Un autre but de l'invention est un distributeur automatique de boissons infusées apte à préparer une boisson de qualité, au goût frais.

Un autre but de l'invention est de réaliser de manière simple et peu coûteuse un distributeur automatique de boissons infusées qui soit sûr et fiable en fonctionnement.

Ces buts sont atteints avec un distributeur automatique de boissons infusées à partir de produit pulvérulent comprenant :
- un groupe d'infusion qui comporte une chambre d'infusion apte à recevoir un piston presseur et des moyens d'actionnement en un mouvement de coulissement relatif dudit piston presseur et/ou de ladite chambre d'infusion l'un par rapport à l'autre, à partir d'une position de repos dans laquelle le piston se trouve à l'extérieur de la chambre jusqu'à une position de travail à l'intérieur de la chambre d'infusion,
- un distributeur de produit pulvérulent comportant un orifice de distribution communiquant avec une goulotte apte à canaliser ledit produit vers la chambre d'infusion,
Du fait que ladite goulotte est amenée en contact avec un dispositif de nettoyage entraîné par le piston presseur ou par la chambre d'infusion sur au moins une partie de leur course.

Le distributeur de produit pulvérulent peut être du type comportant un réservoir qui contient le produit à infuser et à l'intérieur duquel se trouve un moyeu à palettes apte à passer une certaine quantité de produit, au travers d'un orifice de distribution, dans une goulotte qui l'achemine en proximité de la chambre d'infusion. Un tel distributeur peut également être un broyeur de grains de café qui envoie directement, au travers d'un orifice de distribution, ou par l'intermédiaire d'une chambre tampon, une certaine quantité de café dans une goulotte qui la transfère dans la chambre d'infusion. Une telle goulotte est un conduit qui est disposé généralement vertical ou incliné par rapport à la chambre d'infusion, de manière à ce que le produit pulvérulent tombe par gravité à l'intérieur de la chambre d'infusion.

Plus particulièrement selon l'invention, la goulotte du distributeur est nettoyée automatiquement par un dispositif de nettoyage. Par dispositif de nettoyage on comprend donc un dispositif comportant des moyens ayant une action de raclage, d'essuyage ou de nettoyage par jet de fluide. Le dispositif de nettoyage peut ainsi agir par contact direct avec la goulotte du distributeur, voire même moyennant un fluide, tel l'air soufflé ou aspiré en direction de la goulotte.

Un tel contact direct du dispositif de nettoyage avec la goulotte peut se faire en un seul point, notamment par un mouvement de frappe, en touchant d'un coup la goulotte (montée par exemple moyennant des moyens élastiques de fixation) qui est ainsi secouée pour faire tomber la poudre qui collait à ses parois ; ou alors ce contact pouvant être fait en plusieurs points d'une trajectoire parcourue par un élément du dispositif de nettoyage se déplaçant contre les parois de la goulotte. Le nettoyage de la goulotte se fait donc automatiquement car le dispositif de nettoyage est entraîné par un élément mobile de l'appareil, en l'occurrence le piston presseur et/ou la chambre d'infusion. Le piston et la chambre sont agencés de manière à pouvoir coulisser l'un par rapport à l'autre selon un axe vertical, un axe horizontal ou oblique en étant entraînés par un mécanisme mis en mouvement par un moteur électrique, par un vérin hydraulique, etc.

Cette solution s'avère simple et économique, car elle ne fait appel ni à un mécanisme complémentaire ni à son entraînement. De surcroît, ce nettoyage se fait alors automatiquement à chaque cycle, sans nécessiter une intervention de l'utilisateur, telle une instruction, commande, etc, ce qui garantit en permanence l'obtention d'une boisson au goût toujours frais.

Avantageusement, ledit dispositif de nettoyage est directement entraîné par ledit piston presseur lors de son mouvement de coulissement.

On aurait pu, certes, envisager une solution où le dispositif de nettoyage serait entraîné par un mécanisme intermédiaire qui transforme, par exemple, un mouvement vertical rectiligne du piston presseur en un mouvement spécifique du dispositif de nettoyage par rapport à la goulotte du distributeur. On préfère toutefois, pour plus de simplicité et de fiabilité, un entraînement direct de ce dernier lors d'un mouvement du piston.

De préférence, ledit dispositif de nettoyage comprend un racloir solidaire du piston presseur qui se déplace le long de ladite goulotte.

Par racloir on comprend soit une pièce rigide de forme complémentaire à celle du canal de la goulotte, montée éventuellement de manière souple ; soit un essuyeur, qui est une pièce légèrement plus grande, en un matériau souple (par exemple une mousse), qui est pressée contre les parois de la goulotte ; soit sous forme de brosse comportant donc des touffes de poils prévus pour balayer les parois de la goulotte. On pourrait également prévoir une buse d'air reliée à une pompe ou à un ventilateur qui se déplace le long de la goulotte et souffle la poudre de café. Dans une variante, la buse d'air pourrait être précédée d'une pulvérisation d'eau le long des parois de la goulotte.

Ainsi, dans un mode préféré de réalisation de l'invention, le dispositif de nettoyage reçoit le mouvement du piston presseur, qui effectue, lui, un mouvement de coulissement vertical vers le bas permettant à un racloir proéminent (par rapport au piston) de descendre le long des parois d'une goulotte de transfert du distributeur de produit pulvérulent. Ceci permet d'assurer un bon nettoyage de la goulotte sur toute sa longueur, permettant de décoller même les particules très fines de poudre accrochées à ses parois, pour une construction compacte, n'altérant pas l'encombrement de l'appareil.

Utilement, ladite goulotte présente une section transversale en U, en étant ouverte vers ledit racloir et montée inclinée vers la chambre d'infusion.

Une telle goulotte, montée inclinée par rapport à l'axe vertical de la chambre d'infusion, assure un bon transfert du produit pulvérulent vers la chambre d'infusion tout en permettant au racloir d'avoir accès aux parois internes de la goulotte.

Dans une variante de l'invention, ledit racloir est en contact avec la paroi interne de ladite goulotte montée pivotante, à l'encontre d'un ressort, par rapport au châssis du distributeur.

Ceci permet un montage rigide du racloir, la goulotte pouvant alors avoir une certaine mobilité pour compenser les jeux de positionnement, de montage ou de fabrication de l'ensemble, tout en étant en contact permanent, sous la poussée du ressort, avec la surface active du racloir.

Avantageusement, ladite goulotte est amenée à pivoter, lors du contact avec ledit racloir, à partir d'une première position où elle est orientée vers la chambre d'infusion en une deuxième position où elle est orientée en direction d'un bac de récupération.

Ainsi, ce pivotement peut se faire autour d'un axe horizontal ou d'un axe vertical de manière à orienter la goulotte soit vers la chambre d'infusion pour le transfert du produit pulvérulent à infuser, soit vers un bac adjacent de récupération des résidus de produit aggloméré sur les parois de la goulotte et enlevés par frottement du racloir contre les parois internes de la goulotte.

Dans une autre variante de l'invention, ledit racloir est un balai flexible qui vient en contact avec la paroi interne de ladite goulotte.

Ainsi, un tel balai flexible peut parcourir en longueur ladite goulotte qu'il nettoie en même temps, tout en assurant un bon contact de frottement avec sa ou ses parois internes. Dans ce cas, la goulotte peut être montée fixe (moyennant une fixation rigide par rapport à son support), voire, comme précédemment, elle peut être montée pivotante à l'encontre d'un ressort de rappel.

De préférence, ledit racloir présente une partie frontale dont le contour externe est conformé à celui interne de ladite goulotte.

Ainsi, on obtient un bon nettoyage de toutes les parois internes de la goulotte par un contact de frottement avec une pièce de forme complémentaire. La goulotte de transfert du distributeur se trouve ainsi débarrassée de tout résidu de produit pulvérulent, ce qui garantit un goût frais à la boisson obtenue.

Avantageusement, ledit piston presseur est relié au piston d'un vérin hydraulique actionné par un liquide sous pression en provenance d'un circuit hydraulique contenu dans le boîtier dudit distributeur automatique.

Un tel actionnement par vérin hydraulique assure la descente et donc la compression du piston presseur dans la chambre d'infusion sous l'effet du liquide envoyé sous pression par le circuit hydraulique de l'appareil, et ceci d'une manière simple et fiable par rapport aux mécanismes à mouvements motorisés qui sont souvent complexes. Utilement, la course de remontée du piston presseur hors de la chambre d'infusion se fait sous l'effet d'un ressort de rappel pour un fonctionnement souple et pratique. De surcroît, un tel vérin hydraulique s'avère très utile dans le cas d'une machine à café automatique, car le piston s'ajuste automatiquement à la quantité de mouture présente dans la chambre d'infusion lors de la compression, sans tenir compte de la finesse de la mouture de café, de son hygrométrie, etc. afin d'obtenir un tassage optimal de cette dernière et une bonne qualité de café boisson.

De préférence, ledit distributeur de produit pulvérulent comprend un broyeur de grains de café.

Ainsi, dans un premier mode de réalisation de l'invention, le distributeur automatique comprend un broyeur de grains de café ayant l'avantage de produire un café au goût très frais.

Dans un autre mode de réalisation de l'invention, ledit distributeur de produit pulvérulent comprend un réservoir de mouture de café monté amovible par rapport au boîtier dudit distributeur automatique.

Ainsi, un tel distributeur de mouture de café, est avantageusement monté amovible par rapport au boîtier de l'appareil pour un nettoyage encore plus poussé, voire pour être changé par un autre contenant une mouture différente.

L'invention sera mieux comprise à l'étude des modes de réalisation pris à titre nullement limitatif et illustrés dans les figures annexées dans lesquelles :
- la figure 1a est une vue en perspective d'un distributeur automatique selon un premier mode de réalisation de l'invention, le boîtier extérieur étant enlevé et où, la partie supérieure est illustrée dans une vue en coupe partielle avec un plan passant par l'axe du piston presseur de l'appareil,
- la figure 1b est une vue à échelle agrandie du détail A de la figure 1a,

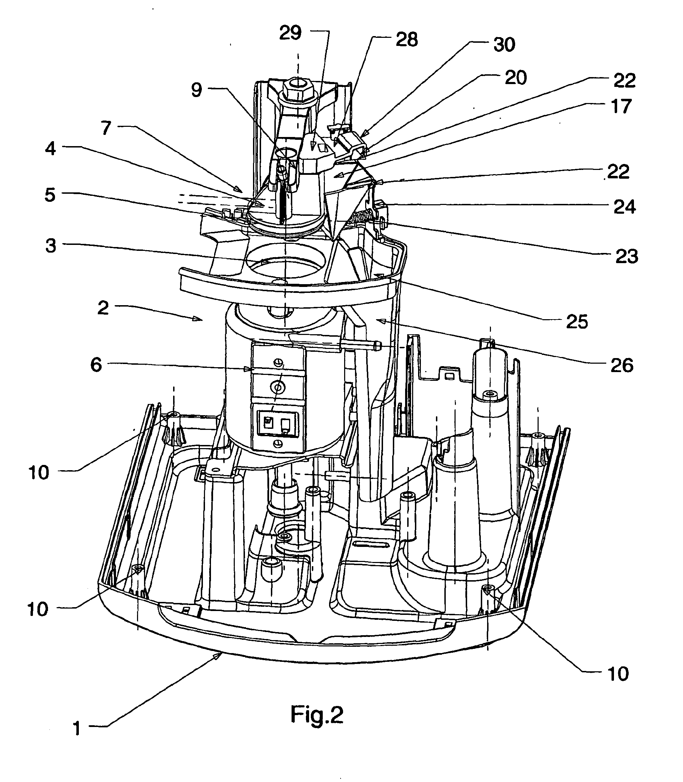

- la figure 2 est une vue en perspective d'un distributeur automatique selon le premier mode de réalisation de l'invention, certains de ses composants étant omis pour plus de clarté,
- la figure 3 est une vue en perspective d'un distributeur automatique selon un deuxième mode de réalisation de l'invention, certains de ses composants étant omis pour plus de clarté.

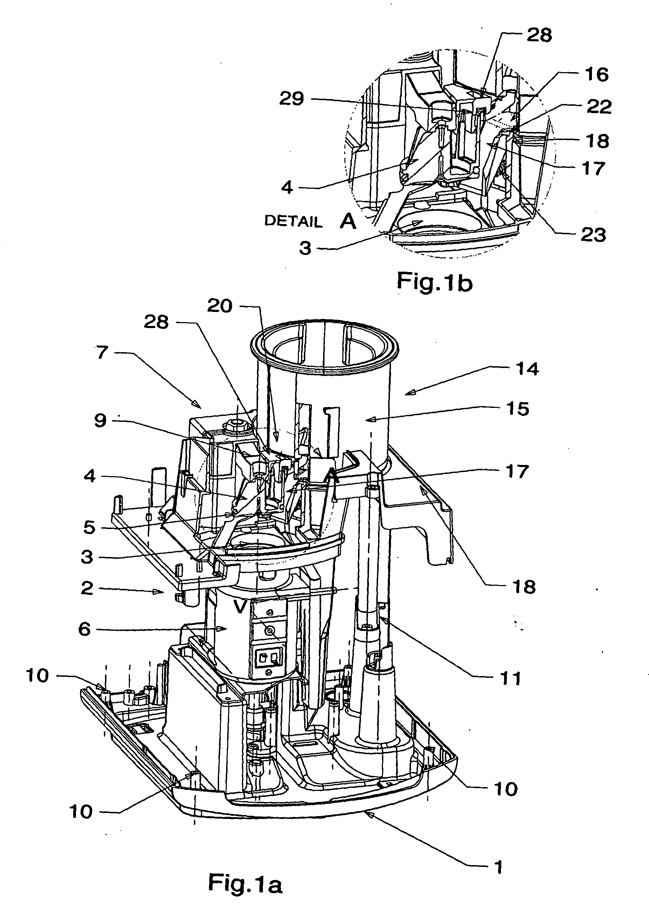

Le distributeur automatique que l'on a représenté en figures 1a et 1b est une machine à café automatique apte à réaliser un café espresso et elle comprend un boîtier (en partie enlevé sur la figure) dont le fond 1 est visible et forme support pour les composants de l'appareil qui seront décrits par la suite. La partie supérieure du boîtier vient se fixer sur le fond 1 par des vis montées dans des orifices 10 prévus à cet effet sur le pourtour du fond 1. On remarque sur la figure 1a un groupe d'infusion 2 comportant une chambre d'infusion 3 en forme de cuve apte à recevoir une certaine quantité de café moulu au-dessus d'une paroi inférieure formant filtre pour la mouture. Dans cet exemple, la chambre d'infusion 3 est montée fixe au-dessus d'un bloc thermique 6, d'axe vertical V, dont elle constitue le prolongement. Le bloc thermique 6 renferme un circuit d'eau et un élément chauffant électrique non représentés, mais qui peuvent être réalisés selon la description du document WO 99/12456. Le bloc thermique 6 assure l'alimentation en eau chaude de la chambre d'infusion 3. En l'occurrence, le bloc thermique pourrait être dissocié de la chambre d'infusion pour prendre d'autres formes : cylindrique allongé ou plat, un tube d'amenée d'eau reliant alors ces deux organes.

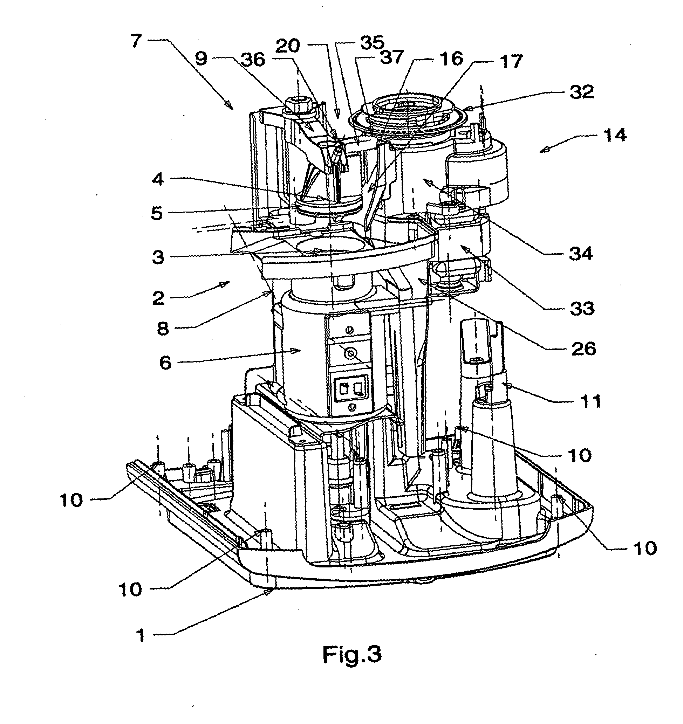

La chambre d'infusion 3 reçoit également un piston presseur 4 qui coulisse selon un même axe vertical pour compacter la mouture. Le piston presseur 4 comporte un joint torique 5 permettant l'étanchéité avec la chambre d'infusion 3 pendant la fabrication du café. L'appareil comprend également des moyens d'actionnement 7 du piston presseur 4 qui sont constitués, dans l'exemple représenté, par un vérin hydraulique 8 (fig. 3) comportant un piston interne qui est relié au piston presseur 4 par l'intermédiaire d'une barre 9 rigide. Le vérin hydraulique 8 reçoit un liquide sous pression en provenance d'un circuit hydraulique de l'appareil, liquide qui déplace le piston du vérin vers le bas en même temps que le piston presseur 4 qui passe alors d'une position de repos (en partie supérieure de l'appareil) à une position de travail, en descendant verticalement en direction de la chambre d'infusion 3 pour comprimer la mouture. Les détails de construction du vérin hydraulique et des moyens d'actionnement du piston presseur sont mieux décrits dans le document WO 99/12457. L'eau chaude est alors envoyée à travers la mouture et la boisson infusée est ensuite évacuée au travers du piston presseur 4 dans lequel est réalisé un canal prolongé par un conduit qui oriente la boisson vers l'extérieur de ce dernier où elle est recueillie dans une tasse. Le vérin hydraulique ici décrit est un vérin à simple effet, le rappel en position de repos du piston du vérin étant réalisé par un ressort situé en partie inférieure du vérin hydraulique.

L'appareil comprend par ailleurs un distributeur de produit pulvérulent 14 qui comprend, dans l'exemple représenté à la figure 1a, un réservoir 15 de café moulu monté amovible par rapport à un siège 18 situé à l'intérieur du boîtier de l'appareil, par exemple moyennant une fixation à baïonnette. Le transfert du café moulu vers l'orifice 16 de sortie en direction d'une goulotte 17 est assuré par une pièce interne équipée de palettes permettant de pousser la mouture en étant actionnée en rotation par un moto-réducteur. La quantité de café délivrée est gérée par une came à bossages tournant à la même vitesse que le moto réducteur, le nombre de bossages étant détecté par un micro-rupteur. Ainsi, le nombre de passages sur les bossages détermine la quantité de café moulu transféré vers la goulotte 17.

La goulotte 17 a une forme générale de tremplin incliné par rapport à la verticale et évasée en sa partie inférieure située au-dessus de la chambre d'infusion 3, la partie supérieure de la goulotte étant agencée à la sortie du réservoir 15, juste en dessous de l'orifice 16 de ce dernier. La goulotte 17 est supportée en pivotement par le siège 18 qui est fixé, lui, au châssis 11 de l'appareil. On remarque plus particulièrement en figure 1 b, deux tenons 22 cylindriques, agencés sur les côtés supérieurs de la goulotte 17, et montés en rotation dans des orifices correspondants du siège 18 (qui a été retiré de cette figure afin de rendre plus visible la goulotte et le dispositif de nettoyage). Les deux tenons 22 de la goulotte 17 forment ensemble un axe de pivotement horizontal de la goulotte 17. La goulotte 17 est reliée, en sa partie inférieure, moyennant un ressort 23 de compression, à un support 24 monté fixe par rapport au siège 18. Le ressort 23 maintient la goulotte 17 en une position initiale où elle est orientée en direction de la chambre d'infusion 3 pour y introduire la mouture. La goulotte 17 peut basculer en arrière, contre la force du ressort 23, tel qu'il sera expliqué par la suite, pour s'orienter vers l'entrée 25 d'un conduit 26 de trop plein de mouture qui communique avec un bac de récupération situé en dessous.

Plus particulièrement selon l'invention, l'appareil comporte un dispositif de nettoyage 20 de la goulotte 17, dispositif qui est solidaire du piston presseur 4. Le dispositif de nettoyage 20 comprend un racloir 28 dont la base 29 comporte des clips de fixation à l'intérieur du piston presseur 4 (fig. 1 b) et la partie frontale 30 est destinée au contact avec la goulotte 17. La partie frontale 30 du racloir 28 présente une forme de râteau de largeur correspondante à celle de la goulotte 17. Le racloir 28 est agencé perpendiculairement à l'axe longitudinal du piston presseur 4 et donc à l'axe vertical V en étant incliné, dans le plan horizontal, en direction de la goulotte 17. De par sa fixation au piston presseur 4, le racloir 28 effectue le même mouvement de coulissement vertical que ce dernier.

En fonctionnement, après avoir vérifié la présence du café moulu dans le réservoir 15, l'utilisateur commande un cycle de préparation de café boisson. Dans l'état initial, le piston presseur 4 se trouve en position haute ou de repos, tel que visible aux figures 1 a, 1b et 2. Le cycle de préparation commence par l'introduction d'une dose de café moulu dans la chambre d'infusion 3. Le café moulu est transféré depuis le réservoir 15, via l'orifice 16 et la goulotte 17 vers la chambre d'infusion 3 au-dessus du bloc thermique 6. Le vérin hydraulique 8 actionne ensuite le piston presseur 4 vers le bas en direction de la chambre d'infusion 3. Le piston presseur 4 descend jusqu'à sa position de compression de la mouture.

Pendant cette phase de descente du piston presseur 4, le racloir 28 descend également et vient nettoyer la paroi de la goulotte 17. Le ressort 23 de compression pousse la goulotte 17 vers le racloir 28 et la maintient en contact avec ce dernier pendant sa descente. Sous la poussée du racloir 28, la goulotte 17 tourne autour de son axe de pivotement et se dirige en direction de l'entrée 25 du canal 26. Le café moulu qui restait accroché sur la paroi de la goulotte 17 est ainsi dirigé vers le canal 26 de trop plein de mouture, puis vers un bac de récupération.

Le piston presseur 4 reste en sa position basse pendant la phase d'infusion du café quand l'eau chaude en provenance du bloc thermique 6 est injectée dans la chambre d'infusion 3 d'où elle passe, à travers un canal pratiqué dans le piston presseur 4, à l'extérieur de l'appareil vers une tasse prévue à cet effet, tel que mieux décrit dans le document WO 99/12456. La phase d'infusion du café terminée, le piston presseur 4 remonte, sous la poussée d'un ressort du vérin, vers sa position haute et la goulotte 17 revient en sa position initiale sous la poussée du ressort 23. Le distributeur est ainsi prêt pour reprendre un nouveau cycle de préparation de café.

La figure 3 représente un autre mode de réalisation de l'invention où les éléments constitutifs de l'appareil, qui restent inchangés, ont les mêmes numéros de référence. On remarque notamment un groupe d'infusion 2 comportant une chambre d'infusion 3 en forme de cuve apte à recevoir une certaine quantité de café moulu au-dessus d'une paroi inférieure formant filtre pour la mouture. Dans cet exemple, la chambre d'infusion 3 est également montée fixe au-dessus d'un bloc thermique 6, d'axe vertical V, et reçoit le piston presseur 4 qui vient comprimer la mouture sous l'action du vérin hydraulique 8 comme précédemment décrit.

L'appareil comprend par ailleurs un distributeur 14 de produit pulvérulent qui est, dans l'exemple représenté à la figure 3, un broyeur 32 de grains de café. Le broyeur ou moulin à café comprend généralement un réservoir de grains de café en partie supérieure et, en partie inférieure, un arbre entraîné en rotation par un moteur électrique 33 pour actionner une meule tournante opposée à une meule fixe, le café en grains étant introduit entre ces meules pour sortir à l'état moulu par un orifice 16 de distribution à travers lequel il passe dans une goulotte 17.

La goulotte 17 a une forme générale de tremplin incliné par rapport à la verticale et évasée en sa partie inférieure située au-dessus de la chambre d'infusion 3, la partie supérieure de la goulotte étant agencée à la sortie du broyeur 32, contre les parois de l'orifice 16 de ce dernier. La goulotte 17 est montée fixe contre le corps 34 du broyeur 32.

L'appareil comprend également un dispositif de nettoyage 20 de la goulotte 17, dispositif qui est solidaire du piston presseur 4. Ce dispositif de nettoyage 20 selon ce deuxième mode de réalisation comprend un balai 35 flexible dont la base 36 rigide est fixée (par exemple par des clips de fixation) à la barre 9 du piston presseur 4 ou, dans une variante, à ce dernier. Le balai 35 peut être réalisé en un matériau flexible, par exemple du caoutchouc, et il a la forme d'une boucle dont les extrémités sont fixées à la base 36 et la partie frontale 37 est destinée au contact avec la paroi de la goulotte 17.

A l'actionnement de l'appareil pour la préparation d'un café, le distributeur de café moulu verse par la goulotte 17 une quantité prédéterminée de poudre de café, correspondant à un temps de fonctionnement prédéterminé du broyeur 32, pour l'obtention de la quantité de boisson voulue dans la chambre d'infusion 3. Lors de la descente du piston presseur 4, le balai 35 vient en contact avec la paroi de la goulotte 17, contact qui est maintenu de par l'élasticité du balai 35. Le café moulu, qui restait accroché aux parois de la goulotte 17, est enlevé par l'action du balai 35, il tombe initialement dans la chambre d'infusion 3 lorsqu'elle est ouverte, ensuite, lorsque le piston ferme la chambre, le café moulu frappe la surface extérieure cylindrique du piston et tombe en direction d'un canal 26 de trop plein de mouture, puis capté dans un bac de récupération. A la fin du cycle d'infusion, le piston presseur 4 remonte en sa position haute avec le balai 35 et le distributeur est prêt pour recommencer un nouveau cycle de fonctionnement.

D'autres variantes et modes de réalisation de l'invention peuvent être envisagés sans sortir du cadre de ces revendications.

On pourrait également envisager une chambre d'infusion qui se déplace selon un mouvement hélicoïdal par rapport au piston. Un dispositif de nettoyage peut alors être solidaire de cette chambre mobile et nettoyer une goulotte notamment à parois en hélice.

## Revendications

1. Distributeur automatique de boissons infusées à partir de produit pulvérulent comprenant:
- un groupe d'infusion (2) qui comporte une chambre d'infusion (3) apte à recevoir un piston presseur (4) et des moyens d'actionnement (7) en un mouvement de coulissement relatif dudit piston presseur (4) et/ou de ladite chambre d'infusion (3) l'un par rapport à l'autre, à partir d'une position de repos dans laquelle le piston se trouve à l'extérieur de la chambre jusqu'à une position de travail à l'intérieur de la chambre d'infusion,
- un distributeur (14) de produit pulvérulent comportant un orifice (16) de distribution communiquant avec une goulotte (17) apte à canaliser ledit produit vers la chambre d'infusion (3),
**caractérisé en ce que** ladite goulotte (17) est amenée en contact avec un dispositif de nettoyage (20) entraîné par le piston presseur (4) ou par la chambre d'infusion (3) sur au moins une partie de leur course.

2. Distributeur automatique selon la revendication 1, **caractérisé en ce que** ledit dispositif de nettoyage (20) est directement entraîné par ledit piston presseur (4) lors de son mouvement de coulissement.

3. Distributeur automatique selon l'une des revendications 1 ou 2, **caractérisé en ce que** ledit dispositif de nettoyage (20) comprend un racloir (28) solidaire du piston presseur qui se déplace le long de ladite goulotte.

4. Distributeur automatique selon la revendication 3, **caractérisé en ce que** ladite goulotte (17) présente une section transversale en U, en étant ouverte vers ledit racloir (28) et montée inclinée vers la chambre d'infusion (3).

5. Distributeur automatique selon la revendication 4, **caractérisé en ce que** ledit racloir (28) est en contact avec la paroi interne de la goulotte (17) montée pivotante, à l'encontre d'un ressort, par rapport au châssis du distributeur (14).

6. Distributeur automatique selon la revendication 5, **caractérisé en ce que** ladite goulotte (17) est amenée à pivoter, lors du contact avec ledit racloir (28), à partir d'une première position où elle est orientée vers la chambre d'infusion (3) en une deuxième position où elle est orientée en direction d'un bac de récupération.

7. Distributeur automatique selon la revendication 3, **caractérisé en ce que** ledit racloir est un balai (35) flexible qui vient en contact avec la paroi interne de ladite goulotte (17).

8. Distributeur automatique selon l'une des revendications 3 à 7, **caractérisé en ce que** ledit racloir (28) présente une partie frontale (30) dont le contour externe est conformé à celui interne de ladite goulotte.

9. Distributeur automatique selon l'une des revendications précédentes, **caractérisé en ce que** ledit piston presseur (4) est relié au piston d'un vérin hydraulique (8) actionné par un liquide sous pression en provenance d'un circuit hydraulique contenu dans le boîtier dudit distributeur automatique.

10. Distributeur automatique selon l'une des revendications précédentes, **caractérisé en ce que** ledit distributeur (14) de produit pulvérulent comprend un broyeur (32) de grains de café.

11. Distributeur automatique selon l'une des revendications 1 à 9, **caractérisé en ce que** ledit distributeur (14) de produit pulvérulent comprend un réservoir (15) de mouture de café monté amovible par rapport au boîtier dudit distributeur automatique.

## Claims

1. An automatic dispenser for automatically dispensing beverages brewed from a powder, said automatic dispenser comprising:
· a brew unit (2) which comprises a brew chamber (3) suitable for receiving a presser piston (4) and actuation means (7) for causing said presser piston (4) and/or said brew chamber (3) to slide relative to each other, from a rest position in which the piston is outside the chamber to a working position inside the brew chamber; and
· a powder dispenser (14) having a dispensing orifice (16) that communicates with a chute (17) suitable for channeling said powder towards the brew chamber (3);
said automatic dispenser being **characterized in that** said chute (17) is brought into contact with a cleaning device (20) driven by the presser piston (4) or by the brew chamber (3) over at least a portion of their stroke.

2. An automatic dispenser according to claim 1, **characterized in that** said cleaning device (20) is driven directly by said presser piston (4) as said piston slides.

3. An automatic dispenser according to claim 1 or claim 2, **characterized in that** said cleaning device (20) comprises a scraper (28) that is secured to the presser piston and that moves along said chute.

4. An automatic dispenser according to claim 3, **characterized in that** said chute (17) is channel-section, is open towards said scraper (28), and is mounted to be inclined towards the brew chamber (3).

5. An automatic dispenser according to claim 4, **characterized in that** said scraper (28) is in contact with the inside wall of the chute (17) which is mounted to pivot, against a spring, relative to the frame of the dispenser (14).

6. An automatic dispenser according to claim 5, **characterized in that** said chute (17) is brought to pivot, on coming into contact with said scraper (28), from a first position in which it is directed towards the brew chamber (3) to a second position in which it is directed towards a collection tray.

7. An automatic dispenser according to claim 3, **characterized in that** said scraper is a flexible sweeper (35) that comes into contact with the inside wall of said chute (17).

8. An automatic dispenser according to any one of claims 3 to 7, **characterized in that** said scraper (28) has a front portion (30) whose outside outline is shaped to match the inside outline of said chute.

9. An automatic dispenser according to any preceding claim, **characterized in that** said presser piston (4) is connected to the piston of a hydraulic actuator (8) actuated by a liquid under pressure coming from a hydraulic circuit contained in the housing of said automatic dispenser.

10. An automatic dispenser according to any preceding claim, **characterized in that** said powder dispenser (14) comprises a coffee bean grinder (32).

11. An automatic dispenser according to any one of claims 1 to 9, **characterized in that** said powder dispenser (14) comprises a ground coffee reservoir (15) mounted to be removable relative to the housing of said automatic dispenser.

## Patentansprüche

1. Getränkeautomat für Getränke, die auf der Basis eines pulverförmigen Produkts gebrüht sind, mit
- einer Brühgruppe (2), die eine Brühkammer (3) aufweist, welche einen Presskolben (4) aufnehmen kann, und Betätigungsmittel (7) für eine relative Gleitbewegung des Presskolbens (4) und/oder der Brühkammer (3) zueinander ausgehend von einer Ruhestellung, in welcher sich der Kolben außerhalb der Kammer befindet, bis zu einer Arbeitsstellung innerhalb der Brühkammer,
- einem Verteiler (14) von pulverförmigem Produkt, mit einer Verteilungsöffnung (16), die mit einer Rinne (17) verbunden ist, die das Produkt zur Brühkammer (3) kanalisieren kann,
**dadurch gekennzeichnet, dass** die Rinne (17) mit einer Reinigungseinrichtung (20) in Kontakt gebracht wird, die vom Presskolben (4) oder der Brühkammer (3) auf wenigstens einen Teil dessen bzw. deren Wegs mitgenommen wird.

2. Getränkeautomat nach Anspruch 1, **dadurch gekennzeichnet, dass** die Reinigungseinrichtung (20) vom Presskolben (4) bei seiner Gleitbewegung unmittelbar mitgenommen wird.

3. Getränkeautomat nach einem der Ansprüche 1 oder 2, **dadurch gekennzeichnet, dass** die Reinigungseinrichtung (20) einen Abstreifer (28) aufweist, der mit dem Presskolben fest verbunden ist, der sich entlang der Rinne verlagert.

4. Getränkeautomat nach Anspruch 3, **dadurch gekennzeichnet, dass** die Rinne (17) einen U-förmigen Querschnitt aufweist, die zum Abstreifer (28) offen und zur Brühkammer (3) geneigt angebracht ist.

5. Getränkeautomat nach Anspruch 4, **dadurch gekennzeichnet, dass** der Abstreifer (28) mit der Innenwand der Rinne (17) in Kontakt steht, die gegen eine Feder bezüglich des Gestells des Getränkeautomats (14) schwenkbar angebracht ist.

6. Getränkeautomat nach Anspruch 5, **dadurch gekennzeichnet, dass** die Rinne (17) beim Kontakt mit dem Abstreifer (28) ausgehend von einer ersten Stellung zum Schwenken gebracht wird, in welcher sie zur Brühkammer (3) gerichtet ist, bis zu einer zweiten Stellung, in welcher sie in Richtung einer Auffangwanne gerichtet ist.

7. Getränkeautomat nach Anspruch 3, **dadurch gekennzeichnet, dass** der Abstreifer ist eine biegsame Bürste (35) ist, die mit der Innenwand der Rinne (17) in Kontakt gelangt.

8. Getränkeautomat nach einem der Ansprüche 3 bis 7, **dadurch gekennzeichnet, dass** der Abstreifer (28) einen stirnseitigen Teil (30) aufweist, dessen Außenkontur dem Innenkontur der Rinne entspricht.

9. Getränkeautomat nach einem der vorhergehenden Ansprüche, **dadurch gekennzeichnet, dass** der Presskolben (4) mit dem Kolben einer hydraulischen Vorrichtung (8) verbunden ist, die von einem unter Druck stehenden Flüssigkeit betätigt wird, die aus einem hydraulischen Kreis stammt, der im Gehäuse des Getränkeautomats enthalten ist.

10. Getränkeautomat nach einem der vorhergehenden Ansprüche, **dadurch gekennzeichnet, dass** der Verteiler (14) von pulverförmigem Produkt ein Mahlwerk (32) für Kaffeebohnen umfasst.

11. Getränkeautomat nach einem der Ansprüche 1 bis 9, **dadurch gekennzeichnet, dass** der Verteiler (14) von pulverförmigem Produkt einen Behälter (15) für den gemahlenen Kaffee aufweist, der bezüglich dem Gehäuse des Getränkeautomats abnehmbar angebracht ist.
